# EUROPEAN PATENT APPLICATION

(11) **EP 4 603 463 A1**
(43) Date of publication of application: **20.08.2025**
(21) Application number: 25158233.4
(22) Date of filing: 17.02.2025
(51) Int. Cl.: C03B 33/02, B23K 26/08, B23K 26/122, B23K 26/146, B23K 26/364, B23K 26/53, C03B 33/09

(54) **PROCESS AND DEVICE FOR CUTTING GLASS ESPECIALLY BOROSILICATE GLASS AND CERAMIC GLASS**

(30) Priority: 19.02.2024 IT 202400003454
(71) Applicant: Glass Company S.r.l., 61122 Pesaro (PU) (IT)
(72) Inventor: BERNABUCCI, Claudio, 61122 Pesaro (IT); PALUMBO, Lorenzo, 61121 Pesaro (IT)
(74) Representative: Benedetti, Gianluca

(57) **Abstract**

Method for cutting glass especially borosilicate or ceramic glass comprising providing support and retention means or for at least one glass sheet; providing at least one laser generator in relative direct or indirect movement relationship according to three orthogonal Cartesian axes with respect to the support and retention means for at least one glass sheet; providing at least one means for dispensing water or aqueous solution/mixture on the sheet, preferably in the form of a punctiform nozzle or tip for supplying water or aqueous solution/mixture from means for containing the water in any state in a relative movement relationship according to three orthogonal Cartesian axes with respect to the support and retention means for at least one borosilicate or ceramic glass sheet; generating a first laser beam for obtaining an engraving and/or filamentation on said at least one glass sheet; depositing a strip of water or aqueous solution on said engraving and/or filamentation so that it penetrates thereinto throughout its extension; generating a second laser beam tracing the engraving; possible alternated repetition of deposition of strips of water or aqueous solutions on the engraving and generating further laser beams to trace the engraving until there is obtained at the engraving a cut passing through said at least one glass sheet to cleave the pieces; device for implementing the method comprising means for supporting and retaining at least one glass sheet; at least one laser generator in relative direct or indirect movement relationship according to three orthogonal Cartesian axes with respect to the means for supporting and retaining at least one borosilicate or ceramic glass sheet; at least one means for dispensing water or aqueous solution/mixture on the sheet, preferably in the form of a punctiform nozzle or tip for supplying water or aqueous solution/mixture from means for containing water in any state in a relative movement relationship according to three orthogonal Cartesian axes with respect to the means for supporting and retaining at least one glass sheet; for alternated emission of laser beams and wetting strips on the sheet along identically coincident lines until perforation along all the lines and cleaving of the pieces.

## Description

### Field of the art

There is known the technique for cutting glass sheets through devices using laser beam generators:
typically the source of laser beams is directly and/or indirectly carried by reflection, to move with respect to the glass sheet, or vice versa, to obtain on the latter with the generated laser beam a linear engraving and/or linear filamentation, that is weakening the material in the straight, curved or combined focal region corresponding to the fracture line intended to be obtained; the passage of the beam is usually repeated a second time precisely at the engraving and/or filamentation made previously and with the second passage the engraving deepens passing through and therefore obtaining the cutting of the sheet and the cleaving of the pieces.

The technique mentioned above and the devices for the relative implementation cannot be practically used for cutting borosilicate glass sheets and for cutting the ceramic glass sheets, due to the ultra-low coefficient of thermal dilation of these materials.

In addition, besides challenges faced in low dilation glasses, the prior art technique for cleaving using laser beams is difficult to use also in large thickness glasses and in special glasses in general.

In particular, the impracticability of the prior art and of the devices for the relative implementation is observed when it comes to cutting from the glass sheet closed-shaped sheets, especially if defined by curved lines, given that the cut portion, even in the case of through cutting throughout the perimeter, is not detached, or it is not detached enough to allow industrial applications, from the sheet from which it was cut, due to the ultra-narrow interruption of the laser cutting in the material.

The known art of laser glass cutting involves the use of water:
in the Japanese patent application No. JP2018/030139A a jet of water in combination with laser beams is disclosed for engraving glass panes: the liquid is used as a focusing intermediary of the laser beam; more specifically a first laser beam is direct focusing, without intermediation of the liquid, a second laser beam uses the liquid as a focusing intermediary, see paragraphs [0065] and [0066] as well as Figure 4. In this context, the liquid jet must necessarily be coaxial to the laser beam in order to make the laser beam itself more coherent; such greater coherency does not contribute in any way to solving the cut and detachment problems in the borosilicate and ceramic glass sheets and in large thickness glasses and in special glasses in general, especially when it comes to cutting from the glass sheet closed-shaped sheets, especially if defined by curved lines.

In the international patent application No. WO2022259963A1 which entered the European phase with publication No. EP4353691A1, a water jet in combination with laser beams to break glass panes is disclosed: the laser pierces the glass by successive points and the water helps an external force to break the glass along the line by pre-fracture points created by the laser, see paragraphs [0010], [0044] and [0045].

Also this technique of breaking the glass along pre-fracture line does not contribute in any way to solving the cut and detachment problems in the borosilicate and ceramic glass sheets and in large thickness glasses and in special glasses in general, especially when it comes to cutting from the glass sheet closed-shaped sheets, especially if defined by curved lines.

### Objects of the invention

In this context, the main object of the present invention is to provide a method for the feasible use of laser beams for cutting glass sheets especially borosilicate and for cutting ceramic glass sheets.

At the same time the main object of the present invention is to provide a device for implementing such innovative method for using laser beams also for cutting glass sheets especially borosilicate and for cutting ceramic glass sheets.

Yet another object of the present invention is to achieve the preceding objects through an innovation that can also be applied to facilitate the laser cutting and cleaving even glass of any kind and type and particularly for glasses which are resistant to and/or not recommended for cutting and cleaving using laser beam due to their chemical, physical and dimensional characteristics.

Yet another object of the present invention is to achieve the preceding objects through a device that can be adapted to the devices according to the prior art.

A further object of the present invention is to attain any one of the aforementioned objects through a method and a device for relative implementation that are simple and efficient, safe to use and relatively inexpensive considering the actual results attained therewith.

### Summary of the solution concept

All these and other objects are attained by the method for cutting glass especially borosilicate or ceramic glass according to the present invention as defined by the claims, comprising:
providing means for supporting and retaining at least one glass sheet, especially borosilicate glass or ceramic glass, but also glass of any kind and type and in particular glass which is resistant to and/or not recommended for cutting and cleaving using laser beam due to its chemical, physical and dimensional characteristics;
providing at least one laser generator in relative direct or indirect movement relationship according to three orthogonal Cartesian axes with respect to the means for supporting and retaining at least one glass sheet;
providing means for supplying a fluid by sprinkling and/or spraying and/or submerging and/or atomising and/or splashing on the sheet, preferably in the form of wetting means in a relative movement relationship according to three orthogonal Cartesian axes with respect to the means for supporting and retaining at least one glass sheet;
generating a first laser beam to obtain an engraving and/or a filamentation on said at least one glass sheet;
depositing a layer and preferably a strip of water or aqueous solution on said engraving and/or filamentation so that it penetrates thereinto and/or covers it throughout its extension;
generating a second laser beam tracing the engraving and/or filamentation up to obtaining at the engraving and/or filamentation of through cut for cleaving and/or removing pieces in said at least one glass sheet;
as well as with the device according to the present invention also as defined by the claims, comprising:
   means for supporting and retaining at least one glass sheet especially borosilicate glass or ceramic glass, but also glass of any kind and type and in particular glass which is resistant to and/or not recommended for cutting and cleaving using laser beam due to its chemical, physical and dimensional characteristics;
   at least one laser generator in relative direct or indirect movement relationship according to three orthogonal cartesian axes with respect to the means for supporting and retaining at least one glass sheet;
   means for supplying a fluid by sprinkling and/or spraying and/or submerging and/or atomising and/or splashing on the sheet, preferably in the form of wetting means in a relative movement relationship according to three orthogonal Cartesian axes with respect to the means for supporting and retaining at least one glass sheet;
   for alternated emission of laser beams and wetting strips on the sheet along identically coincident lines up to perforation cleaving along all the lines.

Advantageously, said fluid supplied for deposition on said engraving and/or filamentation has a density such to allow the penetration thereof in liquid state into the engraving and/or filamentation at the temperature and pressure conditions of the environment where the support and/or retention means are placed for at least one glass sheet provided and a volatility such to allow the evaporation thereof when heated by the laser beams.

Advantageously, said fluid supplied for deposition on said engraving and/or filamentation consists of water or aqueous solution.

Advantageously, said fluid supplied for deposition on said engraving and/or filamentation consists of aerosol ice or freeze aerosol and freeze spray.

Advantageously, such wetting means consist of water or aqueous solution punctiform supply means from means for containing water in any physical state.

Advantageously, such water or aqueous solution punctiform supply means consist of at least one punctiform or microjet nozzle in contact or without contact with the sheet.

Advantageously, such water or aqueous solution punctiform supply means consist of at least one porous tip typically made of felt or nylon, similarly to that of water-based felt pen.

Advantageously, such water or aqueous solution punctiform supply means consist of at least one ball tip similarly to that of writing ballpoint pens.

Advantageously, there may be provided for an alternating repetition of depositing strips of water or aqueous solution on the engraving and generating further laser beams to trace the engraving and the alternated deposits of water or aqueous solution in the engraving and the tracing of the latter by a laser beam can be alternately repeated until the furrow becomes a through-furrow to allow the cleaving thereof.

Advantageously, the removal of the cut pieces combined with further through engravings for discharging tensions of the material departing outside the piece to be obtained by cutting.

Advantageously, the removal of the cut pieces is combined with further through engravings for discharging tensions of the material departing inside the piece to be removed by cutting.

### Static description of the embodiment

A device for the method for cutting glass especially borosilicate or ceramic glass according to the present invention may consist of any laser device for cutting glasses according to the prior art, appropriately implemented with wetting means that is the linear supply and deposition of water or aqueous solution.

The device for cutting glass especially borosilicate or ceramic glass implemented according to the present invention shall be intended as an automatic device, with kinematic mechanisms and actuator means subjected to the management computer logic, comprising:
a work surface adapted to support placed thereon in a substantially horizontal position one or more glass sheets especially borosilicate or ceramic glass, provided with appropriate means for retaining the sheets;
the work surface may be fixed or movable according to one or more orthogonal Cartesian axes, in a relative mutual mobility relationship with the mobility or staticity of the devices described below, which lie and operate on the surface and on the sheet where they lie.

One or more laser generator supports, that is laser cutting heads, connected to one or more kinematic chains supported suspended on the support plane of the sheets, in a relative movement relationship according to three orthogonal Cartesian axes with respect to the means for supporting and retaining the sheets.

One or more laser generators, that is laser cutting heads, associated with said supports, adapted to project a laser beam perpendicularly to the sheets and possibly also with the angular inclination;
the Italian national patent applications No. 102022000021186 and No 102022000021195 on behalf of the Applicant in question Glass Company S.r.l. show devices, which are referred to herein by way of example, adapted to movably project a laser beam on a glass, orthogonally to the sheet or also in an inclined fashion, in which there may for example be implemented the invention according to the present invention; without prejudice to any embodiment suitable for the purpose.

One or more supports for wetting means, that is punctiform scattering sprayers, connected to one or more kinematic chains supported suspended on the support plane of the sheets, in a relative movement relationship according to three orthogonal Cartesian axes with respect to the means for supporting and retaining the sheets.

One or more wetting means that is punctiform scattering sprayers associated with said supports, consisting of microjets adapted to supply a strip of water or aqueous solution on the sheet, in contact or without contact therewith.

Alternatively or cumulatively, one or more punctiform scattering sprayers associated with said supports consisting of a porous tip, for example made of natural or synthetic material such as felt or nylon, such as for example water-based ink writing felt pens, or consisting of a ball tip such as for example writing ballpoint pens, adapted to supply a strip of water or aqueous solution on the sheet.

One or more tanks and/or systems for supplying water or aqueous solution to said punctiform scattering sprayers, for the purposes outlined below.

### Dynamic description of the embodiment

Thus, having completed the static description of a preferred embodiment of the device for implementing the method for cutting glass sheets especially borosilicate or ceramic glass according to the present invention, below is the dynamic description, or the relative operation, corresponding under another approach to the method as claimed:
on the work, resting and retention surface there are manually or automatically supplied the glass sheets to be subjected to the cutting.

Upon running an appropriately programmed computer logic, at least one laser generator, that is a laser cutting head, can be moved over the sheets, in a relative movement relationship according to three orthogonal Cartesian axes with respect to the means for supporting and retaining the sheets, for example through a robotic arm or portal or tripod stand movable framework with operating appendage which can be moved or articulated, or other device according to the prior art suitable for the purpose.

The laser generator, that is the laser cutting head, through the mobility of its support and/or through the mobility of the surface for supporting the sheet, is driven to outline an open or closed line on the surface of the sheet and at the same time to carry out an engraving and/or a filamentation on the surface of the sheet corresponding to the line which it is driven to outline.

The engraving line may however be shaped straight and/or broken and/or curved to reach the cutting line intended to be obtained; in the present example there is carried out a specific reference to a closed curved line, for example a circumference, so as to obtain a cleaving and removal of a circle of the sheet.

In the specific case of defining a closed curved line thus made, the circumferential engraving is supplemented by engraving segments arranged in a spoke-like fashion, so as to discharge the tensions and stiffness of the material when cleaving and removing the cut piece, as outlined hereinafter.

Upon running an appropriately programmed computer logic, at least one wetting means, that is a water or aqueous solution punctiform dispensing sprayer can be moved over the sheets, in a relative movement relationship according to three orthogonal Cartesian axes with respect to the means for supporting and retaining the sheets, for example through a robotic arm or portal or tripod stand movable framework with operating appendage which can be moved or articulated, or other device according to the prior art suitable for the purpose.

The wetting means, that is the water or aqueous solution punctiform dispensing sprayer, consisting of microjets or porous tips or ball tips, through the mobility of its support and/or through the mobility of the surface for supporting the sheet, is driven to outline an open or closed line on the surface of the sheet and tracing the engraving and/or the filamentation on the surface of the sheet previously made by the laser beam and depositing a strip of water or aqueous solution in the and/or on the engraving and/or filamentation.

Therefore, the laser generator, that is the laser cutting head resumes operating as described above and therefore brought to trace the previously marked engraving, where the supplied water or aqueous solution boils and evaporates suddenly and potently, pressing the walls of the micro-furrow consisting of the engraving.

The alternating depositions of water or aqueous solution in the engraving and the tracing of the latter by the laser beam may be alternately repeated until the furrow becomes a through furrow.

When the furrow becomes a through furrow throughout the linear extension of the engraving, the cutting is carried out and the pieces of the sheet may be cleaved for the forced orthogonal application and separated easily;
in particular, the piece defined by the closed line whether broken or curved, may be removed easily;
even more specifically there may be easily cleaved and removed the piece defined by the closed curved line, for example a circumference so as to obtain the removal of a circle of the sheet, where particular importance lies in the ease obtained from the sudden and potent boiling and evaporation of the supplied water or aqueous solution, which presses against the walls of the micro-furrow consisting of the engraving and allows the easy removal thereof.

As a matter of fact, it was observed that the application of a layer of a fluid with appropriate density, that allows it to at least penetrate into the upper part of the cavities generated by the engravings and/or by the filaments, and with appropriate volatility, which allows it to remain in the liquid state at room temperature where the device is located and evaporate if suitably heated, has at least two feasible functions:
given that it is an endothermic process, the evaporation absorbs part of the energy irradiated by the laser source, virtually increasing the breaking threshold of the processed material, that is of the glass, borosilicate glass, ceramic glass. This allows to irradiate the material with higher energy without causing the breaking thereof;

Furthermore, given that it can be considered a constant volume process, the evaporation of the fluid in the engravings and/or filaments entails a pressure increase therein, at least in a first approximation. Together with the local volumetric changes caused by the thermal shock, this additional pressure contributes more efficiently than the thermal shock alone, to the separation of the material.

The removal may possibly be actually combined with discharge engravings, provided using the same process and device, departing radially externally from the circumference which defines the circle if this is intended to be obtained, or internally if a drilled sheet is intended to be obtained.

### Alternative embodiments

It is obvious that in further alternative embodiments still falling within the solution concept subject of the embodiment illustrated above and claimed below, the method and the device for cutting glass sheets especially borosilicate glass and ceramic glass, according to the present invention, may be implemented through technical and mechanical equivalents, i.e. provided with further supplementary solutions, same case applying to all configurations of the relative components can be varied to suit the purpose:

In particular:
the penetration of the fluid in the liquid state into the engravings and/or filaments and the relative evaporation when heated by the laser may be attained using any liquid suitable for the purpose, in the liquid and/or gaseous and/or frozen state.

The wetting of the glass sheet may be obtained using pouring and/or wetting and/or sprayer and/or atomiser means of any type and kind suitable for the purpose; it may also be located on the line of the cutting operation, but generalised to most or throughout the glass sheet; at most, the wetting may also be carried out by submerging prior to laying the sheet on the support and retention means.

The wetting liquid typically consists of water and/or aqueous solutions and/or water mixtures, but it may also consist of any liquid suitable for the purpose which evaporates instantaneously when impacted by the laser beam without deflagrating.

The wetting means may consist of punctiform means for supplying water or aqueous solution dispensed from means for containing water in any physical state.

The water or aqueous solution punctiform supply means may consist of at least one punctiform or microjet nozzle in contact or without contact with the sheet.

The water or aqueous solution punctiform supply means may consist of at least one porous tip typically made of felt or nylon, similarly to that of water-based felt pen.

Such water or aqueous solution punctiform supply means may consist of at least one ball tip similarly to that of writing ballpoint pens.

There may be provided for an alternating repetition of depositing strips and/or layers of water or aqueous solution on the engraving and generating further laser beams to trace the engraving and the alternated deposits of water or aqueous solution in the engraving and the tracing of the latter by a laser beam can be alternately repeated until the furrow becomes a through-furrow to allow the cleaving thereof.

The removal of the cut pieces may be combined with further through engravings for discharging tensions of the material departing outside the piece to be obtained by cutting.

The removal of the cut pieces may be combined with further through engravings for discharging tensions of the material departing inside the piece to be removed by cutting.

### Advantages of the invention

As observable from the preceding detailed description of a preferred embodiment and from the description outlined above relating to some embodiments, the method and the device for cutting glass especially borosilicate or ceramic glass according to the present invention offer advantages corresponding to the attainment of these and other preset objects:
they allow to obtain the cutting of borosilicate or ceramic glass substantially using standard laser devices for cutting the glass modified by providing a device that is substantially simple and homologous in the actuators and kinematic mechanisms to the ones that the device is already provided with according to the prior art, with the further advantage lying in the reliability in the implementation to utilise these actuators and kinematic mechanisms that the devices are already provided with according to the prior art that have an extensively proven reliability.

Besides allowing the cutting of borosilicate glass and ceramic glass, the method and the device of the relative embodiment according to the present invention are also very useful in the cutting and cleaving of glass with high thicknesses, that is from 10 mm upwards, but it attains production improvements also with reference to glasses with thicknesses smaller than 10 mm, accelerating and improving the cleaving function eliminating and reducing micro-cracks and unevenness that may be generated on the lower edge with reference to the cleaving thrust, that is on the face/opposite side of the glass sheet with reference to the face/incidence side of the laser beam.

## Claims

1. Method for cutting glass especially borosilicate glass and ceramic glass, **characterised in that** it comprises supplying support and retention means for at least one glass sheet, supplying at least one laser generator in a relative movement relationship according to three orthogonal Cartesian axes with respect to the support and retention means for at least one borosilicate glass or ceramic glass sheet, supplying wetting means in a relative movement relationship according to three orthogonal Cartesian axes with respect to the support and retention means for at least one glass sheet; generating a first laser beam to obtain an engraving and/or filamentation in a continuous line on said at least one glass sheet; subsequent depositing a strip of water or aqueous solution on said engraving and/or filamentation tracing the continuous line so that it penetrates thereinto and/or it is superimposed on the entire extension thereof; subsequent generating at least one second laser beam following the whole the engraving and/or filamentation up to obtaining
- at the engraving - a through cut for splitting and/or removing pieces in said at least one glass sheet; possible alternated repetition of deposition of strips of water or aqueous solutions on the engraving and generating further laser beams to trace the engraving until there is obtained at the engraving a cut passing through said at least one glass sheet to cleave the pieces.

2. Glass cutting process according to claim **1 characterised in that** it is supplied to be deposited above said engraving and/or filamentation a fluid which has a density such to allow the penetration thereof in liquid state into the engraving and/or filamentation at the temperature and pressure conditions of the environment where the support and/or retention means are placed and a volatility such to allow the evaporation thereof when heated by the laser beam.

3. Glass cutting process according to claim 1 **characterised in that** said water or aqueous solution supplied to be deposited on said engraving and/or filamentation is in the form of aerosol ice or freeze aerosol or freeze spray.

4. Process according to claims 1 to 3 **characterised in that** it provides wetting means or water or aqueous solution punctiform supply means in the form of at least one punctiform or microjet nozzle.

5. Process according to claims 1 to 3 **characterised in that** it provides wetting means or water or aqueous solution punctiform supply means in the form of at least one porous tip or ball tip.

6. Process according to each of the preceding claims **characterised in that** it provides for an alternating repetition of depositing strip of water or aqueous solution on the engraving and generating further laser beams to follow the engraving and the alternated deposits of water or aqueous solution in the engraving and the tracing of the latter by a laser beam can be alternately repeated until the furrow becomes a through-furrow.

7. Process according to the preceding claims **characterised in that** it provides for removing cut pieces combined with further through engravings for discharging tensions of the material departing outside and/or inside the piece to be obtained by cutting.

8. Device for cutting glass especially borosilicate glass and ceramic glass to implement the process according to the preceding claims **characterised in that** it comprises support and retention means for at least one glass sheet, at least one laser generator in a relative movement relationship according to three orthogonal cartesian axes with respect to the support and retention means for at least one glass sheet pointed at said glass sheet and capable of producing on said glass sheet at least two coincident engraving lines, wetting means independent from said laser generator in a relative movement relationship according to three orthogonal Cartesian axes with respect to the support and retention means for at least one glass sheet, for the emission in alternating succession - on the sheet - laser beams and humidification strips along coincident engraving lines up to perforation along all the lines.

9. Glass cutting device according to claim 8 **characterised in that** the fluid deposited on said engraving and/filamentation consists of water or aqueous solution also in the form of aerosol ice or freeze aerosol or freeze spray.

10. Device according to claims 8 and 9 **characterised in that** it provides for wetting means or water or aqueous solution punctiform supply means consisting of at least one punctiform or microjet nozzle.

11. Device according to claims 8 and 9 **characterised in that** it provides for wetting means or water or aqueous solution punctiform supply means consisting of at least one porous tip or ball tip.
